(19) Europäisches Patentamt / European Patent Office / Office européen des brevets

(11) **EP 2 370 206 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(21) Anmeldenummer: **09764722.6**

(22) Anmeldetag: **27.11.2009**

(51) Int Cl.:
***B01J 23/00*** *(2006.01)*

(86) Internationale Anmeldenummer:
**PCT/EP2009/008469**

(87) Internationale Veröffentlichungsnummer:
**WO 2010/060637 (03.06.2010 Gazette 2010/22)**

(54) **KATALYSATORTRÄGER, VERFAHREN ZU SEINER HERSTELLUNG SOWIE VERWENDUNG**

CATALYST CARRIER, METHOD FOR THE PRODUCTION THEREOF, AND USE THEREOF

SUPPORT DE CATALYSEUR, PROCÉDÉ DE PRODUCTION DUDIT SUPPORT ET SON UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.11.2008 DE 102008059341**

(43) Veröffentlichungstag der Anmeldung:
**05.10.2011 Patentblatt 2011/40**

(73) Patentinhaber: **Süd-Chemie IP GmbH & Co. KG 81925 München (DE)**

(72) Erfinder:
• **HAGEMEYER, Alfred 83043 Bad Aibling (DE)**
• **HABLE, Karl-Heinz 84137 Vilsbiburg (DE)**
• **KYRIOPOULOS, Alice 83607 Holzkirchen (DE)**
• **SCHECK, Peter 82205 Gilching (DE)**
• **KERSCHER, Rudolf 84061 Ergoldsbach (DE)**
• **HABERKORN, Ernst 85368 Moosburg (DE)**

(74) Vertreter: **Kuba, Stefan et al Clariant Produkte (Deutschland) GmbH IPM / Patent & License Management Arabellastraße 4a 81925 München (DE)**

(56) Entgegenhaltungen:
WO-A1-2005/061107  WO-A1-2005/065821
DE-A1- 4 405 876  DE-A1-102007 025 223
DE-A1-102007 025 443  GB-A- 585 571
JP-A- 2005 246 197  US-A- 5 248 644
US-A- 5 369 069  US-A1- 2006 035 780

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betriff einen offenporigen Katalysatorträger, bestehend aus einem Material, welches ein natürliches Schichtsilikat sowie $ZrO_2$ umfasst.

Alkenylacetate sind ein wichtiger Monomerbaustein in der Synthese von Kunststoffpolymeren. Die Hauptanwendungsgebiete von Alkenylacetaten sind u.a. die Herstellung von Polyvinylacetat, Polyvinylalkohol und Polyvinylacetal sowie die Co- und Terpolymerisation mit anderen Monomeren wie zum Beispiel Ethylen, Vinylchlorid, Acrylat, Maleinat, Fumarat und Vinyllaurat.

Alkenylacetate werden beispielsweise in der Gasphase aus Essigsäure und Ethylen durch Umsetzung mit Sauerstoff hergestellt, wobei die für diese Synthese eingesetzten Katalysatoren vorzugsweise Pd als Aktivmetall, Au als Promotor und eine Alkalimetallkomponente als Copromotor enthalten, vorzugsweise Kalium in Form des Acetats. In dem Pd/Au-System dieser Katalysatoren liegen die Metalle Pd und Au nicht in Form von Metallpartikeln des jeweiligen reinen Metalls vor, sondern vielmehr in Form von Pd/Au-Legierungspartikeln von möglicherweise unterschiedlicher Zusammensetzung, wenngleich das Vorliegen von unlegierten Partikeln nicht ausgeschlossen werden kann. Alternativ zu Au kann beispielsweise auch Cd oder Ba als Copromotor eingesetzt sein.

Gegenwärtig werden Alkenylacetate überwiegend mittels so genannter Schalenkatalysatoren hergestellt, bei welchen die Edelmetalle Pd und Au den als Formkörper ausgebildeten Katalysatorträger nicht vollständig durchdringen, sondern vielmehr nur in einem mehr oder weniger breiten äußeren Bereich (Schale) des Katalysatorträger-Formkörpers enthalten sind (vgl. hierzu EP 565 952 A1, EP 634 214 A1, EP 634 209 A1 und EP 634 208 A1), während die weiter innen liegenden Bereiche des Katalysatorträgers edelmetallfrei sind. Mit Hilfe von Schalenkatalysatoren ist in vielen Fällen eine selektivere Reaktionsführung möglich als mit Katalysatoren, bei denen die Träger bis in den Trägerkern hinein mit Aktivkomponente imprägniert ("durchimprägniert") sind.

Die im Stand der Technik bekannten Schalenkatalysatoren zur Herstellung von Alkenylacetaten können beispielsweise Katalysatorträger auf der Basis von Siliziumoxid, Aluminiumoxid, Alumosilikat, Titanoxid oder Zirkoniumoxid sein (vgl. hierzu EP 839 793 A1, WO 1998/018553 A1, WO 2000/058008 A1 und WO 2005/061107 A1). Dabei gelangen Katalysatorträger auf der Basis von Titanoxid oder Zirkoniumoxid derzeit jedoch kaum zum Einsatz, da diese Katalysatorträger gegenüber Essigsäure nicht langzeitstabil sind bzw. verhältnismäßig teuer sind. Im Falle von Zr-Suspensionsbeschichteten ("coating of suspension") Schalenkatalysatoren treten Probleme mit der Abriebsfestigkeit und der mechanischen Stabilität auf.

Der überwiegende Anteil der gegenwärtig eingesetzten Katalysatoren zur Herstellung von Alkenylacetaten sind Schalenkatalysatoren mit einer Pd/Au-Schale auf einem porösen amorphen, als Kugel ausgebildeten Alumosilikatträger auf der Basis von natürlichen Schichtsilikaten, die mit Kaliumacetat als Copromotor durchimprägniert sind.

Derartige Alkenylacetat-Schalenkatalysatoren werden üblicherweise auf so genanntem chemischen Wege hergestellt, bei welchem der Katalysatorträger mit Lösungen von entsprechenden Metall-Vorläuferverbindungen beispielsweise durch Eintauchen des Trägers in die Lösungen oder mittels des Incipient-Wetness-Verfahrens (Porenfüllverfahren), bei welchem der Träger mit einem seinem Porenvolumen entsprechenden Lösungsvolumen beladen wird, getränkt wird.

Die Pd/Au-Schale des Katalysators wird beispielsweise erzeugt, indem zunächst der Katalysatorträger in einem ersten Schritt mit einer Pd-Salzlösung getränkt und anschließend in einem zweiten Schritt die Pd-Komponente mit einer Base, z.B. NaOH auf den Katalysatorträger in Form einer Pd-Hydroxidverbindung fixiert wird. In einem darauffolgenden separaten dritten Schritt wird der Katalysatorträger dann mit einer Au-Salzlösung getränkt und danach die Au-Komponente ebenfalls mittels Base fixiert. Nach der Fixierung der Edelmetallkomponenten in der äußeren Schale des Katalysatorträgers wird der Träger gewaschen, anschließend getrocknet, optional kalziniert und abschließend reduziert. Die so erzeugte Pd/Au-Schale weist üblicherweise eine Dicke von etwa 100 $\mu$m bis 500 $\mu$m auf.

Üblicherweise wird der mit den Edelmetallen beladene Katalysatorträger nach dem letzten Fixierungs- oder nach dem Reduzierungsschritt mit Kaliumacetat beladen, wobei die Beladung mit Kaliumacetat nicht nur in der äußeren, mit Edelmetallen beladenen Schale erfolgt, sondern der Katalysatorträger vielmehr mit dem Copromotor vollständig durchimprägniert wird. Als Katalysatorträger wird überwiegend ein kugelförmiger Träger mit der Bezeichnung "KA-160" der Firma SÜD-Chemie AG, München, Deutschland auf der Basis eines natürlichen Schichtsilikats eingesetzt, der eine BET-Oberfläche von ungefähr 160 $m^2$/g aufweist.

Die mittels der im Stand der Technik bekannten Schalenkatalysatoren auf der Basis von Pd und Au sowie KA-160-Trägern erreichten Alkenylacetat-Selektivitäten betragen circa 90 Mol.-% bezogen auf das zugeführte Ethylen, wobei die verbleibenden 10 Mol.-% der Reaktionsprodukte im Wesentlichen $CO_2$ sind, das durch Totaloxidation der organischen Edukte/Produkte gebildet wird.

Zur Steigerung der Aktivität von Alkenylacetat-Katalysatoren werden aktivmetallfreie Katalysatorträger auf der Basis von natürlichen Schichtsilikaten vor der Edelmetallabscheidung zunächst mit Zirkoniumkationen oberflächendotiert. Dazu werden beispielsweise fertig ausgebildete Katalysatorträger-Formkörper mit einer Lösung einer Zirkoniumsalzverbindung imprägniert und danach kalziniert. Derartige Katalysatoren zeichnen sich zwar im Vergleich zu den entsprechenden Katalysatoren ohne Zirkoniumdotierung durch eine gesteigerte Aktivität hinsichtlich der Alkenylacetat-Produktion aus, die gesteigerte Aktivität ist jedoch nicht von langer Dauer, da aufgrund der korrosiven Atmosphäre bei der Alkenylacetat-Synthese das Zr verhältnismäßig schnell vom Katalysatorträger freigesetzt wird und daher zur Aktivierung des Katalysators nicht mehr zur Verfügung steht. Das durch Imprägnieren aufgebrachte Zirkonium ist auch nach dem Kalzinieren eines modifizierten Trägers nicht hinreichend stabil gegenüber Essigsäure unter Prozessbedingungen.

Aufgabe der vorliegenden Erfindung ist es daher, einen Katalysatorträger bereitzustellen, mittels dem Alkenylacetat-Katalysatoren hergestellt werden können, die sich über einen verhältnismäßig langen Zeitraum durch eine verhältnismäßig hohe Alkenylacetat-Aktivität auszeichnen.

Diese Aufgabe wird gelöst durch einen Katalysator wie im Anspruch 1 definiert.

Überraschenderweise wurde aufgefunden, dass mittels eines offenporigen Katalysatorträgers, bestehend aus einem Material, welches ein natürliches Schichtsilikat sowie $ZrO_2$ umfasst, wobei das $ZrO_2$ in der tetragonalen Modifikation vorliegt, Alkenylacetat-Katalysatoren hergestellt werden können, die sich über einen verhältnismäßig langen Zeitraum durch eine verhältnismäßig hohe Alkenylacetat-Aktivität auszeichnen.

$ZrO_2$ kommt in drei Modifikationen vor. Bei Raumtemperatur liegt $ZrO_2$ in monokliner Modifikation vor, bei einer Temperatur oberhalb von 1170 °C liegt $ZrO_2$ in tetragonaler Modifikation vor und oberhalb von 2370 °C bis zum Schmelzpunkt bei 2690 °C liegt $ZrO_2$ in kubischer Modifikation vor.

In dem erfindungsgemäßen Katalysatorträger ist die tetragonale Hochtemperaturmodifikation des $ZrO_2$ bei Raumtemperatur stabil.

Der erfindungsgemäße Katalysatorträger setzt in siedender Essigsäure weniger als 0,06 Gew.-% Zr berechnet als $ZrO_2$ frei, bezogen das Gewicht des in dem Katalysatorträger enthaltenen $ZrO_2$.

Es konnte festgestellt werden, dass die Essigsäurelöslichkeit des in dem erfindungsgemäßen Katalysatorträger enthaltenen $ZrO_2$ verhältnismäßig niedrig ist und der Katalysatorträger deshalb wenig $ZrO_2$ verliert, so dass verhältnismäßig wenig $ZrO_2$ in dem Katalysatorträger enthalten sein muss, um die gesteigerte Aktivität eines entsprechenden

Katalysators über einen verhältnismäßig langen Zeitraum hinweg aufrechtzuerhalten. Darüber hinaus konnte gezeigt werden, dass mittels des erfindungsgemäßen Verfahrens zur Herstellung des erfindungsgemäßen Katalysatorträgers Träger erhältlich sind, die in siedender Essigsäure lediglich 0,05 Gew.-% bis 0,0001 Gew.-% lösliches $ZrO_2$ aufweisen bezogen auf das Gewicht des in dem Katalysatorträger enthaltenen $ZrO_2$. Der erfindungsgemäße Katalysatorträger setzt in siedender Essigsäure weniger als 0,06 Gew.-% Zr berechnet als $ZrO_2$ frei, bezogen auf das Gewicht des in dem Katalysatorträger enthaltenen $ZrO_2$, bevorzugt 0,05 Gew.-% bis 0,0001 Gew.-%, mehr bevorzugt 0,01 Gew.-% bis 0,0003 Gew.-%, noch mehr bevorzugt 0,008 Gew.-% bis 0,0005 Gew.-% und weiter bevorzugt 0,003 Gew.-% bis 0,0008 Gew.-%.

Zur Bestimmung der Zr-Freisetzung des erfindungsgemäßen Katalysatorträgers werden 10 g des trockenen Katalysatorträgers in Pulverform in 250 ml 96 %iger siedender Essigsäure (p.a.) für 1 h bei Normaldruck unter Rückflussbedingungen gekocht. Danach wird der Katalysatorträger über einen Filter abgetrennt, das Filtrat zur Trockene eingedampft und die Masse des verbleibenden Feststoffrückstands bestimmt. Dieser Rückstand gibt durch Vergleich mit der eingesetzten Menge Katalysatorträger Aufschluss darüber, wie hoch die Gesamtessigsäurelöslichkeit des Katalysatorträgers ist. Der Zirkoniumgehalt des Feststoffrückstands wird mittels *Inductively Coupled Plasma* (ICP) bestimmt und daraus die Menge an von dem Katalysatorträger freigesetzten Zr als $ZrO_2$ berechnet. Dabei wird angenommen, dass sämtliches im Träger beinhaltetes Zirkonium als Zirkondioxid vorliegt. Die zur Bestimmung der Essigsäurelöslichkeit des Trägers verwendeten Mengen an Probe und Agenzien kann im Bedarfsfall zur Erzielung höherer Genauigkeiten auch um je den gleichen Faktor hochskaliert werden.

Der Gesamtzirkoniumgehalt des Katalysatorträgers wird mittels geeignetem Aufschluss und ICP-Analyse bestimmt und daraus der Gesamtzirkondioxidgehalt des Trägers berechnet. Dabei wird angenommen, dass sämtliches im Träger beinhaltetes Zirkonium als Zirkondioxid vorliegt. Die Zr-Freisetzung des Katalysatorträgers in siedender Essigsäure (berechnet als $ZrO_2$) bezogen auf die im Katalysatorträger enthaltene Gesamtmenge an $ZrO_2$ wird wie folgt berechnet:

```
Zr-Freisetzung des Katalysatorträgers(berechnet als ZrO₂-
Freisetzung) [Gew.-%] = (freigesetztes Zr von der Probe
(berechnet als ZrO₂)[g]/(Gesamtzirkondioxidgehalt der Probe [%]
* Masse der Katalysatorträgerprobe [g]) *100 Gew.-%.
```

Beispielweise: 10 g Katalysatorträger mit einem Zr-Gehalt von 7,40 Gew.-% (entspricht 10 g $ZrO_2$) werden in Essigsäure behandelt. Im Eluat werden 0,074 g Zr nachgewiesen. Die Zr-Freisetzung berechnet sich zu (0,074 g*(123,223)/91,224))/10 g = 0,1 %.

Gemäß einer bevorzugten Ausführungsform des erfindungsgemäßen Katalysatorträgers ist es vorgesehen, dass zumindest 50 Gew.-% des in dem Katalysatorträger enthaltenen $ZrO_2$ in tetragonaler Modifikation vorliegen. Da der Anteil des in dem erfindungsgemäßen Katalysatorträger enthaltenen $ZrO_2$ mit tetragonaler Modifikation mittels Röntgendiffraktometrie (XRD) bestimmt wird, bezieht sich der besagte Anteil lediglich auf röntgenbeugungsaktives $ZrO_2$, das in dem erfindungsgemäßen Katalysatorträger enthalten ist.

Erfindungsgemäß bevorzugt ist es, dass zumindest 50 Gew.-% des in dem erfindungsgemäßen Katalysatorträger enthaltenen $ZrO_2$ röntgenbeugungsaktiv sind, bevorzugt zumindest 70 Gew.-%, mehr bevorzugt zumindest 80 Gew.-%, noch mehr bevorzugt zumindest 90 Gew.-% und weiter bevorzugt zumindest 95 Gew.-%.

Das in dem erfindungsgemäßen Katalysatorträger enthaltene $ZrO_2$ liegt zu einem verhältnismäßig großen Anteil in der tetragonalen Modifikation vor. Tetragonales Zirkondioxid weist eine verhältnismäßig hohe spezifische Oberfläche auf. Die bei Raumtemperatur stabile Phase ist jedoch das monokline Zirkondioxid, welches eine verhältnismäßig niedrige spezifische Oberfläche aufweist. Überraschenderweise ist es gelungen durch einfaches Inkorporieren von undotiertem Zirkonhydroxid in eine ein Schichtsilikat umfassende Trägermatrix und nachträgliches Kalzinieren die oberflächenreiche tetragonale $ZrO_2$-Phase in hoher Ausbeute zu erzeugen und zu stabilisieren. Damit ist mit verhältnismäßig wenig Einsatz von teurem Zirkon eine relativ hohe spezifische Zirkondioxidoberfläche in dem erfindungsgemäßen Katalysatorträger bereitgestellt. Der aus dem Stand der Technik bekannte Katalysatorträger, der hergestellt ist, indem ein Katalysatorträger mit einer Zirkoniumsalzlösung imprägniert und danach kalziniert wird, ist bezüglich des Zirkons röntgenamorph. Dies bedeutet in der Regel, dass das Zirkon in Form von nanokristallinen Partikeln und/oder in amorpher Form vorliegt.

Entsprechend ist es gemäß einer weiter bevorzugten Ausführungsform des erfindungsgemäßen Katalysatorträgers vorgesehen, dass zumindest 50 Gew.-% des in dem erfindungsgemäßen Katalysatorträger enthaltenen $ZrO_2$ in der tetragonalen Modifikation vorliegen, bevorzugt 50 Gew.-% bis 100 Gew.-%, mehr bevorzugt 70 Gew.-% bis 99 Gew.-%, noch mehr bevorzugt 85 Gew.-% bis 98 Gew.-%, weiter bevorzugt 90 Gew.-% bis 97 Gew.-%, weiter bevorzugt 92 Gew.-% bis 96 Gew.-% und noch weiter bevorzugt 93 Gew.-% bis 95 Gew.-%. Die vorstehenden Anteile beziehen sich dabei wiederum auf das in dem Träger enthaltene röntgenbeugungsaktive $ZrO_2$. Ein Anteil von 100 Gew.-% tetragonalem $ZrO_2$, der erfindungsgemäß besonders bevorzugt ist, bedeuten dabei, dass in einem entsprechenden XRD-Spektrum nur Signale von tetragonalem $ZrO_2$ identifizierbar sind und keine Signale von $ZrO_2$ monokliner oder kubischer Modifikation.

Entsprechend einer weiter bevorzugten Ausführungsform des erfindungsgemäßen Katalysatorträgers ist es vorgesehen, dass in einem XRD-Spektrum des Trägers das Verhältnis der Intensität des Signals bei 2theta von 28,2 ° zur Intensität des Signals bei 2 theta von 30,2 ° kleiner/gleich 1 ist, vorzugsweise kleiner als 0,5, bevorzugt kleiner als 0,3, noch mehr bevorzugt kleiner als 0,05 und noch weiter bevorzugt gleich 0 ist. Dabei ist es ferner bevorzugt, dass XRD-Spektrum des Trägers frei von Signalen von kubischem $ZrO_2$ ist. Bei 2theta von 28,2 °liegt der Intensitätsstärkste Peak (hkl 111) von monoklinem $ZrO_2$, bei 2theta von 30,2 °liegt der Intensitätsstärkste Peak (hkl 101) von tetragonalem $ZrO_2$. Bei dem XRD-Spektrum handelt es sich um ein sogenanntes XRD-Differenzspektrum. Das XRD-Differenzspektrum wird erzeugt, indem ein XRD-Spektrum von einem erfindungsgemäßen und einem Referenzkatalysatorträger unter gleichen Bedingungen aufgenommen wird und das XRD-Spektrum des Referenzkatalysatorträgers von dem des erfindungsgemäßen Katalysatorträgers subtrahiert wird. Der Referenzkatalysatorträger wird analog dem erfindungsgemäßen Katalysatorträger hergestellt, mit der Ausnahme, dass der Referenzkatalysatorträger nicht mit Zr versetzt wird. Die XRD-Spektren werden vorzugsweise auf einem Pulver-Röntgenbeugungsdiffraktometer von BRUKER axs, Model D4 Endeavor, in Bragg Brentano Geometrie gemessen. Die Geräteparameter sind dabei vorzugsweise: Cu-$K_{alpha}$ 1,5406 Ä, Stromspannung 40 kV, Stromstärke 40 mA und die Scan Parameter: continous scan, 2theta von 5° bis 90°, Schrittweite = 0,03° 2theta, Zeit pro Schritt = 0,5 s, Divergence slit = variabel 12 mm, Antiscattering slit = variabel 12 mm, Probenrotation: 30 rpm.

Das $ZrO_2$ ist in dem Träger in partikulärer Form enthalten. Ansonsten kann das $ZrO_2$ in dem Träger grundsätzlich auch in Form einzelner $ZrO_2$-Einheiten enthalten sein, die beispielsweise in die Gerüststruktur des Materials eingebaut sind. Bevorzugt ist es aber, dass das $ZrO_2$ in dem erfindungsgemäßen Katalysatorträger in partikulärer Form vorliegt. Dadurch wird eine feste Inkorporation des $ZrO_2$ in dem Material und damit eine weitgehend geringe Essigsäurelöslichkeit (Zr-Freisetzung) des im Katalysatorträger enthaltenen $ZrO_2$ gewährleistet.

Gemäß einer weiter bevorzugten Ausführungsform des erfindungsgemäßen Katalysatorträgers ist es vorgesehen, dass das $ZrO_2$ einen mittleren Partikeldurchmesser $d_{50}$ von maximal 50 $\mu$m aufweist, bevorzugt einen mittleren Partikeldurchmesser dso von maximal 30 $\mu$m und weiter bevorzugt einen mittleren Partikeldurchmesser $d_{50}$ von maximal 20 $\mu$m. Die Bestimmung des mittleren Partikeldurchmessers $d_{50}$ wird durch Elementverteilung mittels Elektronenmikroskopie (REM/EDX) bestimmt. Dazu werden die maximalen Abmessungen der 50 größten identifizierbaren $ZrO_2$-Partikel in einem 1 mm x 1 mm großen, beliebig ausgewählten, aber repräsentativen Bereich des EDX Spektrums des Katalysatorträgers ausgemessen und daraus der $d_{50}$-Wert ermittelt. Die EDX-Messung erfolgt vorzugsweise an einem Rasterelektronenmikroskop LEO 1530VP, ausgerüstet mit einem energiedispersiven Spektrometer der Fa. Bruker AXS. Zur Messung wird der Katalysatorträger durchschnitten, auf einen Graphitprobenhalter geklebt. Als Detektor kommt vorzugsweise ein stickstofffreier Siliziumdriftkammerdetektor (XFlash® 4010) mit einer Energieauflösung von 129 eV für die Mangan $K_{alpha}$-Linie bei 130 kcps zum Einsatz.

Es konnte festgestellt werden, dass die erzielbare mechanische Stabilität des Katalysatorträgers umso höher ist, je gleichmäßiger das $ZrO_2$ in der Matrix des Trägers verteilt enthalten ist. Darüber hinaus konnte festgestellt werden, dass Katalysatorträger mit gleichmäßiger Verteilung des $ZrO_2$ nicht nur als Kugel, sondern auch in Form von Hohlzylindern bzw. Triloben gute mechanische Stabilitäten aufweisen. Entsprechend ist das $ZrO_2$ in dem Material homogen bzw. statistisch gleichmäßig verteilt.

Gemäß einer weiter bevorzugten Ausführungsform des erfindungsgemäßen Katalysatorträgers ist es vorgesehen, dass das $ZrO_2$ in dem Katalysatorträger mit einem Anteil von 1 Gew.-% bis 30 Gew.-% enthalten ist, bezogen auf das Gewicht des Katalysatorträgers.

Ist $ZrO_2$ mit einem Anteil von weniger als 1 Gew.-% in dem Katalysatorträger enthalten, so ist die Alkenylacetat-Aktivität eines entsprechenden Katalysators nur geringfügig gesteigert, während oberhalb eines Anteils von 30 Gew.-% die Steigerung der Aktivität des Katalysators mit einer merklichen Abnahme der Alkenylacetat-Selektivität einhergehen kann. Entsprechend ist es gemäß einer weiter bevorzugten Ausführungsform des erfindungsgemäßen Katalysatorträgers vorgesehen, dass das $ZrO_2$ in dem Katalysatorträger mit einem Anteil von 1 Gew.-% bis 30 Gew.-% enthalten ist bezogen aus das Gewicht des Katalysatorträgers, bevorzugt mit einem Anteil von 5 Gew.-% bis 20 Gew.-% und weiter bevorzugt mit einem Anteil von 8 Gew.-% bis 15 Gew.-%.

Entsprechend einer weiter bevorzugten Ausführungsform des erfindungsgemäßen Katalysatorträgers ist es vorgesehen, dass die $ZrO_2$-Partikel gleichmäßig verteilt in dem Träger enthalten sind und der Träger frei oder im Wesentlichen frei von einem Perkolationsnetzwerk von $ZrO_2$-Partikeln ist.

Entsprechend einer weiter bevorzugten Ausführungsform des erfindungsgemäßen Katalysatorträgers ist es vorgesehen, dass die $ZrO_2$-Partikel gleichmäßig über den Querschnitt des Trägers verteilt sind und dass der Träger frei oder im Wesentlichen frei von einem Perkolationsnetzwerk von $ZrO_2$-Partikeln ist.

Bevorzugterweise ist in dem erfindungsgemäßen Katalysatorträger der $ZrO_2$-Gehalt in Abhängigkeit von der Partikelgröße der resultierenden $ZrO_2$-Partikel im Träger so gewählt, dass die Perkolationsschwelle in der Trägermatrix nicht erreicht wird. Wie beispielsweise aus den nachstehenden EDX-Aufnahmen hervorgeht, liegen die $ZrO_2$-Partikel im Wesentlichen als diskrete und nicht als miteinander vernetzte Einheiten und statistisch gleichmäßig verteilt in der Trägermatrix vor. Mit der Perkolationsschwelle im Sinne der Perkolationstheorie (siehe Stauffer D. and Aharony A. : Introduction to Percolation Theory, Taylor and Fransis, London, 1994) ist jene Schwelle bezüglich der Konzentration an $ZrO_2$ im Katalysatorträger gemeint, bei der erstmals ein dreidimensionales $ZrO_2$-Netzwerk vollständig den Träger durchzieht. Es wird angenommen, dass beim Überschreiten der Perkolationsschwelle beim Imprägnieren eines entsprechenden Trägers mit Metallsalzlösungen die Diffusion in die Trägermatrix entlang der $ZrO_2$-Einheiten verläuft, was zu einem höheren bzw. ungleichmäßigeren Eintrag von Metallsalzlösung in den Trägerkern führt und damit die Ausbildung von Schalenkatalysatoren erschwert.

In dem erfindungsgemäßen Katalysatorträger ist ein natürliches Schichtsilikat enthalten. Unter dem Begriff "natürliches Schichtsilikat", wofür in der Literatur auch der Begriff "Phyllosilikat" verwendet wird, wird im Rahmen der vorliegenden Erfindung aus natürlichen Quellen stammendes, unbehandeltes oder behandeltes Silikat-Mineral verstanden, in welchem $SiO_4$-Tetraeder, welche die strukturelle Grundeinheit aller Silikate bilden, in Schichten der allgemeinen Formel $[Si_2O_5]^{2-}$ miteinander vernetzt sind. Diese Tetraederschichten wechsellagern mit so genannten Oktaederschichten, in denen ein Kation, vor allem Al und Mg, oktaedrisch von OH bzw. O umgeben ist. Dabei werden beispielsweise Zweischicht-Phyllosilikate und Dreischicht-Phyllosilikate unterschieden. Im Rahmen der vorliegenden Erfindung bevorzugte Schichtsilikate sind Tonminerale, insbesondere Kaolinit, Beidellit, Hectorit, Saponit, Nontronit, Glimmer, Vermiculit und Smektite, wobei Smektite und dabei insbesondere Montmorillonit besonders bevorzugt sind. Definitionen des Begriffes "Schichtsilikate" finden sich beispielsweise in "Lehrbuch der anorganischen Chemie", Hollemann Wiberg, de Gruyter, 102. Auflage, 2007 (ISBN 978-3-11-017770-1) oder in "Römpp Lexikon Chemie", 10. Auflage, Georg Thieme Verlag unter dem Begriff "Phyllosilikat".

Typische Behandlungen, denen ein natürliches Schichtsilikat vor dem Einsatz als Trägermaterial unterzogen wird, beinhalten insbesondere ein Behandeln mit Säuren, insbesondere Mineralsäuren wie beispielsweise Salzsäure, und/oder ein Kalzinieren.

Ein im Rahmen der vorliegenden Erfindung besonders bevorzugtes natürliches Schichtsilikat ist Montmorillonit, das vorzugsweise in Form eines Bentonits eingesetzt wird. Bentonite sind Gemische von verschiedenen Tonmineralien, die als überwiegenden Bestandteil Montmorillonit (etwa 50 Gew.-% bis 90 Gew.-%) enthalten. Weitere Begleitmineralien können u.a. Quarz, Glimmer und Feldspat sein.

Entsprechend einer weiter bevorzugten Ausführungsform des erfindungsgemäßen Katalysatorträgers ist es vorgesehen, dass das natürliche Schichtsilikat ein säureaktiviertes Schichtsilikat ist.

Säureaktivierte Schichtsilikate sind im Stand der Technik bekannt (vgl. Römpp Lexikon Chemie, 10. Auflage, Georg Thieme Verlag, Begriff "Bentonite"). Um die Adsorptionskraft des erfindungsgemäßen Katalysatorträgers zu erhöhen, liegt das natürliche Schichtsilikat in dem Träger vorzugsweise in Form eines säureaktivierten Schichtsilikates vor. Dabei ist es weiter bevorzugt, dass das säureaktivierte Schichtsilikat säureaktivierter Montmorillonit ist, der erfindungsgemäß weiter bevorzugt in Form eines säureaktivierten Bentonits in dem erfindungsgemäßen Träger enthalten ist.

Gemäß einer weiter bevorzugten Ausführungsform des erfindungsgemäßen Katalysatorträgers ist es vorgesehen, dass der Katalysatorträger eine Azidität von 1 μval/g bis 150 μval/g aufweist.

Der Grad der Azidität des erfindungsgemäßen Katalysatorträgers kann, zumindest indirekt, die Performance eines entsprechenden Katalysators bezüglich der Gasphasensynthese von Alkenylacetaten aus Essigsäure und Ethen vorteilhaft beeinflussen. Entsprechend einer weiter bevorzugten Ausführungsform des erfindungsgemäßen Katalysatorträgers ist es daher vorgesehen, dass der Katalysatorträger eine Acidität von 1 μval/g bis 150 μval/g aufweist, vorzugsweise eine Acidität von 5 μval/g bis 130 μval/g, bevorzugt eine Acidität von 10 μval/g bis 100 μval/g und besonders bevorzugt eine Acidität von 20 μval/g bis 60 μval/g. Die Acidität des Trägers kann beispielsweise durch Imprägnierung des Trägers mit Säure erhöht werden.

Die Acidität eines Katalysatorträgers wird wie folgt bestimmt: 1 g des fein gemahlenen Katalysatorträgers wird mit 100 ml Wasser (mit einem pH-Blindwert) versetzt und unter Rühren 15 Minuten extrahiert. Anschließend wird mit 0,01 n NaOH-Lösung zumindest bis pH 7,0 titriert, wobei die Titration stufenweise erfolgt; und zwar wird zunächst 1 ml der NaOH-Lösung zu dem Extrakt getropft (1 Tropfen/Sekunde), dann 2 Minuten gewartet, der pH-Wert abgelesen, erneut 1 ml NaOH zugetropft, usw. Der Blindwert des eingesetzten Wassers wird bestimmt und die Aciditäts-Berechnung entsprechend korrigiert. Die Titrationskurve (ml 0,01 NaOH gegen pH-Wert) wird dann aufgetragen und der Schnittpunkt der Titrationskurve bei pH 7 bestimmt. Berechnet werden die Moläquivalente in $10^{-6}$ äquiv/g Träger, die sich aus dem NaOH-Verbrauch für den Schnittpunkt bei pH 7 ergeben:

Gesamtsäure:

$$\frac{10 * ml\ 0,01\ n\ NaOH}{1\ Träger} = μval/g$$

Entsprechend einer weiter bevorzugten Ausführungsform des erfindungsgemäßen Katalysatorträgers ist es vorgesehen, dass der Katalysatorträger einen mittleren Porendurchmesser von 8 nm bis 30 nm aufweist.

Um die Porendiffusionslimitierung des erfindungsgemäßen Katalysatorträgers weitgehend gering zu halten, ist es gemäß einer weiter bevorzugten Ausführungsform des erfindungsgemäßen Katalysators vorgesehen, dass der Katalysatorträger einen mittleren Porendurchmesser von 7 nm bis 30 nm aufweist, vorzugsweise einen von 9,5 nm bis 20 nm und besonders bevorzugt einen von 10,5 nm bis 15 nm und am meisten bevorzugt einen von 11,5 bis 13,5nm. Der mittlere Porendurchmesser wird nach DIN 66134 (Bestimmung der Porengrößenverteilung und der spezifischen Oberfläche mesoporöser Feststoffe durch Stickstoffsorption (Verfahren nach Barrett, Joyner und Halenda (BJH)) bestimmt.

Entsprechend einer weiter bevorzugten Ausführungsform des erfindungsgemäßen Katalysatorträgers ist es vorgesehen, dass der Katalysatorträger eine spezifische Oberfläche von kleiner/gleich 180 m²/g aufweist.

Es wurde festgestellt, dass die Alkenylacetat-Selektivität eines mittels des erfindungsgemäßen Katalysatorträgers hergestellten Alkenylacetat-Katalysators umso höher ist bei nahezu gleichbleibender Aktivität des Katalysators, je kleiner die spezifische Oberfläche des erfindungsgemäßen Katalysatorträgers ist. Entsprechend einer besonders bevorzugten Ausführungsform des erfindungsgemäßen Katalysatorträgers ist es daher vorgesehen, dass der Katalysatorträger eine spezifische Oberfläche von kleiner/gleich 180 m²/g aufweist, vorzugsweise eine von kleiner/gleich 160 m²/g, bevorzugt eine von kleiner/gleich 140 m²/g, weiter bevorzugt eine von kleiner/gleich 137 m²/g, mehr bevorzugt eine von kleiner/gleich 135 m²/g, noch mehr bevorzugt eine von kleiner/gleich 133 m²/g und besonders bevorzugt eine von kleiner/gleich 130 m²/g. Die spezifische Oberfläche des erfindungsgemäßen Trägers wird nach DIN 66131 (Bestimmung der spezifischen Oberfläche von Feststoffen durch Gasadsorption nach Brunauer, Emmett und Teller (BET)) mittels Stickstoff bestimmt.

Erfindungsgemäß ist es ferner bevorzugt, dass der Katalysatorträger eine spezifische Oberfläche von 60 m²/g bis 180 m²/g aufweist, vorzugsweise eine von 65 m²/g bis 160 m²/g, bevorzugt eine von 70 m²/g bis 150 m²/g, weiter bevorzugt eine von 75 m²/g bis 140 m²/g, mehr bevorzugt eine von 75 m²/g bis 130 m²/g und am meisten bevorzugt eine von 80 m²/g bis 120 m²/g.

Die Größe der spezifischen Oberfläche, des mittleren Porendurchmessers, des integralen Porenvolumens etc. des Katalysatorträgers hängt insbesondere von der Qualität des eingesetzten natürlichen Schichtsilikats, dem Säurebehandlungsverfahren, d.h. beispielsweise der Natur und der zum Schichtsilikat relativen Menge und der Konzentration der eingesetzten Mineralsäure, der Säurebehandlungsdauer sowie der -temperatur, vom Verpressungsdruck sowie von der Kalzinierdauer und -temperatur sowie der Kalzinieratmosphäre ab.

Der erfindungsgemäße Katalysatorträger weist eine verhältnismäßig hohe Stabilität auf. Entsprechend einer weiter bevorzugten Ausführungsform des erfindungsgemäßen Katalysatorträgers ist es vorgesehen, dass der Katalysatorträger eine Härte von größer/gleich 30 N aufweist, bevorzugt eine Härte von 50 N bis 75 N und besonders bevorzugt eine Härte von 55 N bis 70 N. Die Ermittlung der Härte (Druckhärte) erfolgt an kugelförmigen Proben (Durchmesser: 5 mm) mittels des Tablettenhärtetesters 8M der Firma Dr. Schleuniger Pharmatron AG (Schweiz). Vor der Messung werden die Proben über einen Zeitraum von 2 h bei einer Temperatur von 130 °C getrocknet. Die Härte wird als Durchschnitt von 99 Messungen berechnet. Für die Messungen werden die nachstehend genannten, wählbaren Parameter des Tablettenhärtetesters 8M wie folgt eingestellt:

| Härte (Dimension): | N |
|---|---|
| Distanz zur Probe: | 5,00 mm |
| Zeitverzögerung: | 0,80 s |
| Vorschub-Typ: | 6 D |
| Geschwindigkeit: | 0,60 mm/s |

Erfindungsgemäß bevorzugt ist es, dass der Anteil des erfindungsgemäßen Katalysatorträgers an natürlichem Schichtsilikat größer/gleich 50 Gew.-% ist, vorzugsweise 55 Gew.-% bis 99 Gew.-% beträgt, bevorzugt 60 Gew.-% bis 97 Gew.-%, weiter bevorzugt 65 Gew.-% bis 95 Gew.-% und noch weiter bevorzugt 70 Gew.-% bis 90 Gew.-% bezogen auf das Gewicht des Katalysatorträgers.

Entsprechend einer weiter bevorzugten Ausführungsform des erfindungsgemäßen Katalysatorträgers ist es vorgesehen, dass der Katalysatorträger ein integrales Porenvolumen von 0,25 ml/g bis 0,7 ml/g aufweist.

Der erfindungsgemäße Katalysatorträger weist im Vergleich zu einem Katalysatorträger des Standes der Technik, der mittels einer Zirkoniumsalzlösung mit $ZrO_2$ oberflächendotiert wurde, ein verhältnismäßig großes Porenvolumen auf, da beim Eintrag von $ZrO_2$ bei der Herstellung des erfindungsgemäßen Katalysatorträgers die Poren des Trägers nicht verstopfen. Es konnte festgestellt werden, dass die Alkenylacetat-Selektivität eines mittels des erfindungsgemäßen Katalysatorträgers hergestellten Alkenylacetat-Katalysators vom integralen Porenvolumen des Katalysatorträgers abhängig ist. Daher ist es bevorzugt, dass der Katalysatorträger ein integrales Porenvolumen von 0,25 ml/g bis 0,7 ml/g aufweist, vorzugsweise eines von 0,3 ml/g bis 0,65 ml/g und bevorzugt eines von 0,30 ml/g bis 0,50 ml/g. Das integrale Porenvolumen wird gemäß DIN 66134 (Bestimmung der Porengrößenverteilung und der spezifischen Oberfläche mesoporöser Feststoffe durch Stickstoffsorption (Verfahren nach Barrett, Joyner und Halenda (BJH)) bestimmt.

Entsprechend einer weiter bevorzugten Ausführungsform des erfindungsgemäßen Katalysatorträgers ist es vorgesehen, dass zumindest 80 % des integralen Porenvolumens des Katalysatorträgers von Mesoporen und Makroporen gebildet sind, vorzugsweise zumindest 90 % und bevorzugt zumindest 98 % und am meisten bevorzugt zumindest 99%. Dadurch wird einer durch Diffusionslimitierung bewirkten verminderten Aktivität eines mittels des erfindungsgemäßen Katalysatorträgers hergestellten Alkenylacetat-Katalysators, insbesondere eines Pd/Au-Schalenkatalysators mit verhältnismäßig großer Schalendicke, entgegengewirkt. Dabei werden unter den Begriffen "Mikroporen", "Mesoporen" und "Makroporen" Poren verstanden, die einen Durchmesser von kleiner als 2 nm, einen Durchmesser von 2 nm bis 50 nm bzw. einen Durchmesser von größer als 50 nm aufweisen. Der Volumenanteil der Mesoporen und Makroporen am integralen Porenvolumen wird anhand der Porenvolumenverteilung des erfindungsgemäßen Katalysatorträgers ermittelt, die nach DIN 66134 (Bestimmung der Porengrößenverteilung und der spezifischen Oberfläche mesoporöser Feststoffe durch Stickstoffsorption (Verfahren nach Barrett, Joyner und Halenda (BJH)) bestimmt wird.

Entsprechend einer weiter bevorzugten Ausführungsform des erfindungsgemäßen Katalysatorträgers ist es vorgesehen, dass der Anteil der Poren des Trägers mit einem Durchmesser von 6 nm bis 50 nm am integralen Porenvolumen mehr als 66 % beträgt, vorzugsweise von 66 % bis 80 % und besonders bevorzugt von 68 % bis 75 %. Die Prozentangaben werden aus der Porengrößenverteilung, die nach DIN 66134 (Bestimmung der Porengrößenverteilung und der spezifischen Oberfläche mesoporöser Feststoffe durch Stickstoffsorption (Verfahren nach Barrett, Joyner und Halenda (BJH)) zu bestimmen ist, ermittelt.

Entsprechend einer weiter bevorzugten Ausführungsform des erfindungsgemäßen Katalysatorträgers ist es vorgesehen, dass der Katalysatorträger eine Schüttdichte von größer/gleich 0,4 g/ml aufweist, vorzugsweise eine von größer/gleich 0,45 g/ml, bevorzugt eine von größer/gleich 0,6 g/ml und besonders bevorzugt eine Schüttdichte von 0,6 g/ml bis 0,75 g/ml.

Gemäß einer weiter bevorzugten Ausführungsform des erfindungsgemäßen Katalysatorträgers ist es vorgesehen, dass das in dem Katalysatorträger enthaltene natürliche Schichtsilikat einen $SiO_2$-Gehalt von zumindest 65 Gew.-% aufweist, vorzugsweise einen von zumindest 80 Gew.-% und besonders bevorzugt einen von 85 Gew.-% bis 97 Gew.-%. Dadurch wird eine hohe chemische Beständigkeit des erfindungsgemäßen Katalysatorträgers in der Alkenylacetat-Synthese gewährleistet.

Bei der Gasphasensynthese eines Alkenylacetats aus Essigsäure und Ethen wirkt sich ein verhältnismäßig niedriger $Al_2O_3$-Gehalt in dem natürlichen Schichtsilikat kaum nachteilig aus, während bei hohen $Al_2O_3$-Gehalten mit einer merklichen Abnahme der Druckhärte des Katalysatorträgers gerechnet werden muss. Gemäß einer bevorzugten Ausführungsform des erfindungsgemäßen Katalysatorträgers enthält das natürliche Schichtsilikat daher weniger als 5 Gew.-% $Al_2O_3$, vorzugsweise 0,1 Gew.-% bis 3 Gew.-% und bevorzugt 0,3 Gew.-% bis 2,50 Gew.-% bezogen auf das Gewicht des im erfindungsgemäßen Träger enthaltenen natürlichen Schichtsilikats.

Insbesondere im Hinblick auf die Herstellung von Schalenkatalysatoren ist es günstig, dass der erfindungsgemäße Katalysatorträger als Formkörper ausgebildet ist. Im Prinzip kann der Katalysatorträger jede Form haben, die dem Fachmann für den erfindungsgemäßen Zweck als geeignet bekannt ist. Beispielsweise kann der erfindungsgemäße Katalysatorträger als Kugel, Zylinder, Lochzylinder, Trilobus, Ring, Stern, Torus oder Strang ausgebildet sein, vorzugsweise als Kugel, Lochzylinder oder Trilobus.

Entsprechend einer weiter bevorzugten Ausführungsform des erfindungsgemäßen Katalysatorträgers ist es vorgesehen, dass der Katalysatorträger eine maximale Abmessung von 1 mm bis 25 mm aufweist, vorzugsweise eine maximale Abmessung von 3 mm bis 15 mm.

Gemäß einer weiter bevorzugten Ausführungsform des erfindungsgemäßen Katalysatorträgers ist es vorgesehen, dass der Katalysatorträger als Kugel ausgebildet ist.

Entsprechend einer weiter bevorzugten Ausführungsform des erfindungsgemäßen Katalysatorträgers ist es vorgesehen, dass die Kugel einen Durchmesser von 2 mm bis 10 mm aufweist, vorzugsweise einen Durchmesser von 4 mm bis 8 mm.

Entsprechend einer weiteren Ausführungsform des erfindungsgemäßen Katalysatorträgers ist es vorgesehen, dass der Katalysatorträger mit zumindest einem Oxid eines Metalls ausgewählt aus der Gruppe bestehend aus Hf, Ti, Nb, Ta, W, Mg, Re, Y und Fe dotiert ist, vorzugsweise mit $HfO_2$. Durch die Dotierung kann die Aktivität eines mittels des erfindungsgemäßen Katalysatorträgers hergestellten Alkenylacetat-Katalysators gesteigert werden.

Es kann vorgesehen sein, dass der Katalysatorträger mit $Y_2O_3$ und/oder $HfO_2$ dotiert ist. Durch die $Y_2O_3$-Dotierung wird eine hohe Stabilisierung der tetragonalen Modifikation des $ZrO_2$ gewährleistet und damit einhergehend eine hohe Essigsäure-Beständigkeit des $ZrO_2$. Die $HfO_2$-Dotierung bewirkt eine Erhöhung der Aktivität eines entsprechenden Alkenylacetat-Katalysators. Das $ZrO_2$ selbst kann mit $Y_2O_3$, $HfO_2$ oder $HfO_2$ und $Y_2O_3$ dotiert sein. Dabei kann der Anteil des dotierten $ZrO_2$ an $Y_2O_3$ 1 Gew.-% bis 8 Gew.-% betragen, vorzugsweise 3 Gew.-% bis 5 Gew.-%, und der Anteil des $ZrO_2$ an $HfO_2$ 0,1 Gew.-% bis 5 Gew.-%, vorzugsweise 1 Gew.-% bis 2 Gew.-%. Erfindungsgemäß besonders bevorzugt ist es jedoch, dass das in dem Katalysatorträger enthaltene $ZrO_2$ frei von die tetragonale Phase stabilisierendem Dotierungsoxid ist, insbesondere frei von $Y_2O_3$. Auch ohne Dotierung mit einem die tetragonale Phase stabilisierendem Metalloxid ist das tetragonale $ZrO_2$ in dem erfindungsgemäßen Träger stabil.

Entsprechend einer weiter bevorzugten Ausführungsform des erfindungsgemäßen Katalysatorträgers ist es vorgesehen, dass der Anteil des Katalysatorträgers an Dotierungsoxid zwischen 1 Gew.-% und 20 Gew.-% beträgt, vorzugsweise 2 Gew.-% bis 10 Gew.-% und bevorzugt 3 Gew.-% bis 8 Gew.-% bezogen auf das Gewicht des Katalysatorträgers. Die Dotierung kann dabei beispielsweise durch Oberflächen-Dotierung, wie sie aus dem Stand der Technik bekannt ist, erfolgen oder das Metalloxid/die Metalloxide kann/können in die Matrix des Katalysatorträgers eingearbeitet sein.

Gemäß einer weiter bevorzugten Ausführungsform kann es vorgesehen sein, dass die Wassersaugfähigkeit des Katalysatorträgers 40 % bis 75 % beträgt, bevorzugt 50 % bis 70 % berechnet als Gewichtszunahme durch Wasseraufnahme. Die Saugfähigkeit wird bestimmt, indem 10 g der Trägerprobe mit entionisiertem Wasser 30 min lang getränkt werden, bis von der Trägerprobe keine Gasblasen mehr entweichen. Dann wird das überschüssige Wasser dekantiert und die getränkte Probe mit einem Baumwolltuch abgetupft zur Befreiung der Probe von anhaftender Feuchtigkeit. Anschließend wird der wasserbeladene Träger ausgewogen und die Saugfähigkeit berechnet gemäß:

```
(Auswaage (g) - Einwaage (g)) x 10 = Wassersaugfähigkeit (%)
```

Die vorliegende Erfindung betrifft ferner ein Verfahren zur Herstellung eines erfindungsgemäßen Katalysatorträgers, umfassend

- Herstellen eines Gemisches, umfassend ein pulverförmiges natürliches Schichtsilikat und pulverförmiges Zirkoniumhydroxid;

- Kalzinieren des Gemisches bei einer Temperatur oberhalb von 620 °C; wobei das Gemisch vor dem Kalzinieren zu einem Formkörper geformt wird.

Es konnte festgestellt werden, dass ein mittels des erfindungsgemäßen Verfahrens hergestellter Katalysatorträger eine verhältnismäßig niedrige Essigsäurelöslichkeit (Zr-Freisetzung) des im Katalysator enthaltenen $ZrO_2$ aufweist, so dass verhältnismäßig wenig $ZrO_2$ in dem Katalysatorträger enthalten sein muss, um die gesteigerte Aktivität eines entsprechenden Alkenylacetat-Katalysators über einen verhältnismäßig langen Zeitraum hinweg aufrechtzuerhalten. Die mittels des erfindungsgemäßen Verfahrens hergestellten Katalysatorträger weisen in siedender Essigsäure eine Essigsäurelöslichkeit des im Katalystorträger enthaltenen $ZrO_2$ von kleiner 0,06 Gew.-% bis 0,0001 Gew.-% auf bezogen auf das Gewicht des in dem Katalysatorträger enthaltenen $ZrO_2$. Die Essigsäurelöslichkeit des im Katalysatorträger enthaltenen $ZrO_2$ wird dabei wie bereits vorstehend dargelegt bestimmt.

Darüber hinaus konnte festgestellt werden, dass das in einem mittels des erfindungsgemäßen Verfahrens hergestellten Katalysatorträger enthaltene röntgenbeugungsaktive $ZrO_2$ zu 50 % bis 100 % in der tetragonalen Modifikation vorliegt. Entsprechend einer bevorzugten Ausführungsform des erfindungsgemäßen Verfahrens ist es vorgesehen, dass das natürliche Schichtsilikat ein säureaktiviertes natürliches Schichtsilikat ist.

In dem erfindungsgemäßen Verfahren wird ein Gemisch hergestellt, welches ein pulverförmiges natürliches Schichtsilikat und pulverförmiges Zirkoniumhydroxid enthält. Bei dem natürlichen Schichtsilikat kann es sich dabei um ein säureaktiviertes natürliches Schichtsilikat handeln. Säureaktivierte natürliche Schichtsilikate sind im Stand der Technik bekannt (vgl. Römpp Lexikon Chemie, 10. Auflage, Georg Thieme Verlag, Begriff "Bentonite"). Sie werden hergestellt, indem ein natürliches Schichtsilikat mit einer Mineralsäure behandelt wird, vorzugsweise mit Salzsäure.

Gemäß einer weiter bevorzugten Ausführungsform des erfindungsgemäßen Verfahrens ist es vorgesehen, dass das pulverförmige Zirkoniumhydroxid einen $d_{10}$-Wert zwischen 0,1 $\mu$m und 3,0 $\mu$m, einen $d_{50}$-Wert zwischen 0,5 $\mu$m und 10 $\mu$m und einen $d_{90}$-Wert zwischen 1,0 $\mu$m und 20 $\mu$m aufweist.

Es konnte festgestellt werden, dass die mechanische Stabilität eines mittels des erfindungsgemäßen Verfahrens hergestellten Katalysatorträgers von der Partikelgrößenverteilung des eingesetzten Zirkoniumhydroxids abhängig ist. Wird in das erfindungsgemäße Verfahren ein pulverförmiges Zirkoniumhydroxid eingesetzt, mit einem $d_{10}$-Wert zwischen 0,1 $\mu$m und 3,0 $\mu$m, mit einem $d_{50}$-Wert zwischen 0,5 $\mu$m und 10 $\mu$m und mit einem $d_{90}$-Wert zwischen 1,0 $\mu$m und 20 $\mu$m, so werden Katalysatorträger erhalten, die -vorzugsweise als 5 mm Kugel ausgebildet- durch eine äußerst hohe mechanische Stabilität von bis zu mehr als 55 N gekennzeichnet sind. Insgesamt lassen sich bei zunehmendem $ZrO_2$-Gehalt im Katalysatorträger jedoch niedrigere mechanische Stabilitäten feststellen. Im Falle der Verwendung von Formkörpern größerer Abmessung als 5 mm oder von zylindrischen Formkörpern können auch mechanische Stabilitäten von mehr als 90 N, bevorzugt mehr als 120 N erhalten werden.

Entsprechend einer weiter bevorzugten Ausführungsform des erfindungsgemäßen Verfahrens ist es vorgesehen, dass der mittlere Partikeldurchmesser $d_{50}$ des eingesetzten pulverförmigen Schichtsilikats größer ist als der des eingesetzten Zirkoniumhydroxids.

Es konnte festgestellt werden, dass die mechanische Stabilität eines mittels des erfindungsgemäßen Verfahrens hergestellten Katalysatorträgers größer ist, wenn der mittlere Partikeldurchmesser $d_{50}$ des in das erfindungsgemäße Verfahren eingesetzten natürlichen Schichtsilikates größer ist als der mittlere Partikeldurchmesser $d_{50}$ des eingesetzten Zirkoniumhydroxids, welches während des erfindungsgemäßen Verfahrens zumindest größtenteils in das tetragonale $ZrO_2$ überführt wird. Gemäß einer weiter bevorzugten Ausführungsform des erfindungsgemäßen Verfahrens ist es daher vorgesehen, dass der mittlere Partikeldurchmesser des Schichtsilikates größer ist als der des Zirkoniumhydroxids.

Die Bestimmung des mittleren Partikeldurchmessers $d_{50}$ der Rohstoffe (bzw. auch des $d_{10}$- und $d_{90}$-Wertes) wird mittels Laser auf einem Master Sizer (Malvem Instruments, GB) nach der Standardmethode durchgeführt (andere Messgeräte sind z.B. Horiba LA 500 (Horiba Ltd., JP) oder Helos (Sympatec GmbH, DE), welche das gleiche Messprinzip verwenden). Die $Zr(OH)_4$ bzw. Schichtsilikat-Proben werden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt, wobei der Schnittpunkt des 50 Gew.-%-Ordinatenwertes mit der Summenkurve auf der Abszissenachse den gewünschten $d_{50}$-Wert liefert.

Entsprechend einer weiter bevorzugten Ausführungsform des erfindungsgemäßen Verfahrens ist es vorgesehen, dass das Kalzinieren bei einer Temperatur von 620 °C bis 800 °C durchgeführt wird.

Es konnte festgestellt werden, dass sich ein mittels des erfindungsgemäßen Verfahrens hergestellter Katalysatorträger durch eine besonders geringe ZrO2-Essigsäurelöslichkeit und somit durch einen niedrigen Zr-Verlust im Alkenylacetat-Herstellungsprozess auszeichnet, wenn das natürliche Schichtsilikat und Zirkoniumhydroxid umfassende Gemisch bei einer Temperatur von 620 °C bis 800 °C kalziniert wird, vorzugsweise bei einer Temperatur von 630 °C bis 750 °C, bevorzugt bei einer Temperatur von 650 °C bis 700 °C. Bei der Kalzinierung des Gemisches wird das Zirkoniumhydroxid in $ZrO_2$ überführt.

Darüber hinaus konnte festgestellt werden, dass die Ausbeute an Zirkon, ausgedrückt als $ZrO_2$-Ausbeute, im Katalysatorträger durch Kalzinieren im voran beschriebenen Temperaturbereich besonders hoch ist. Die $ZrO_2$-Ausbeute betrifft den $ZrO_2$-Gehalt des Katalysatorträgers nach der ersten Kalzination und nach der Behandlung mit Mineralsäure. Die $ZrO_2$-Ausbeute wird dabei wie folgt bestimmt:

$ZrO_2$-Ausbeute = Zr-Gehalt des Katalysatorträgers (umgerechnet auf $ZrO_2$) nach der Mineralsäurebehandlung * Menge erhaltener Katalysatorträger / eingesetzte Menge an Zr (umgerechnet zu $ZrO_2$). Die $ZrO_2$- Ausbeute eines mittels des erfindungsgemäßen Verfahrens hergestellten Katalysatorträgers beläuft sich auf mindestens 85 %, bevorzugt auf mindestens 95 % und am meisten bevorzugt auf mindestens 97 %.

Entsprechend einer weiter bevorzugten Ausführungsform des erfindungsgemäßen Verfahrens ist es vorgesehen, dass das Kalzinieren über einen Zeitraum von 3 h bis 24 h durchgeführt wird.

Um eine weitgehend vollständige Überführung des in das erfindungsgemäße Verfahren eingesetzten Zirkoniumhydroxids in $ZrO_2$ zu gewährleisten sowie eine weitgehend vollständige Ausbildung der tetragonalen Modifikation des $ZrO_2$, wird das in das erfindungsgemäße Verfahren einzusetzende Gemisch über einen Zeitraum von zumindest 3 h kalziniert, vorzugsweise über einen Zeitraum von 3 h bis 24 h und besonders bevorzugt über einen Zeitraum von 5 h bis 10 h.

Das Formen des Gemisches zu Formkörpern kann mittels jedem Verfahren und jeder Vorrichtung durchgeführt werden, die dem Fachmann für den erfindungsgemäßen Zweck als geeignet bekannt ist. So kann das Formen von Formkörpern beispielsweise mittels einer Tablettenpresse vorgenommen werden.

Entsprechend einer weiter bevorzugten Ausführungsform des erfindungsgemäßen Verfahrens ist es vorgesehen, dass das Gemisch nach dem Kalzinieren mit einer Mineralsäure behandelt wird.

Um das nach dem Kalzinieren erhaltene feste Gemisch zu reinigen und insbesondere den Großteil an noch verbliebenem essigsäurelöslichem $ZrO_2$ zu entfernen, ist es gemäß einer weiter bevorzugten Ausführungsform des erfindungsgemäßen Verfahrens vorgesehen, dass das Gemisch nach dem Kalzinieren mit einer Mineralsäure behandelt wird. Als Mineralsäuren können dabei jegliche Mineralsäuren eingesetzt werden, die dem Fachmann für den erfindungsgemäßen Zweck als geeignet bekannt sind. Beispiele für bevorzugte Mineralsäuren sind Salzsäure, Salpetersäure, Schwefelsäure und Phosphorsäure, bevorzugt jeweils mit einem pH-Wert von weniger als pH=2, mehr bevorzugt mit einem pH-Wert von weniger als pH=1.

Entsprechend einer weiter bevorzugten Ausführungsform des erfindungsgemäßen Verfahrens ist es vorgesehen, dass die Mineralsäure Salzsäure ist.

Es konnte festgestellt werden, dass das aus dem erfindungsgemäßen Verfahren resultierende kalzinierte Gemisch besonders effektiv mit Salzsäure aufgereinigt werden kann, beispielsweise mit 10-30 %iger Salzsäure. Entsprechend ist es gemäß einer weiter bevorzugten Ausführungsform des erfindungsgemäßen Verfahrens vorgesehen, dass die Mineralsäure Salzsäure ist.

Entsprechend einer weiter bevorzugten Ausführungsform des erfindungsgemäßen Verfahrens ist es vorgesehen, dass das kalzinierte Gemisch nach dem Behandeln mit Mineralsäure gewaschen wird.

Um das kalzinierte Gemisch nach dem Behandeln mit Mineralsäure von Säurerückständen sowie von durch die Mineralsäure aus dem natürlichen Schichtsilikat herausgelösten Bestandteilen zu befreien, wird das kalzinierte Gemisch nach dem Behandeln mit Säure vorzugsweise gewaschen, bevorzugt mit Wasser.

Gemäß einer weiter bevorzugten Ausführungsform des erfindungsgemäßen Verfahrens ist es vorgesehen, dass das kalzinierte Gemisch nach dem Waschen abermals kalziniert wird. Entsprechend einer weiter bevorzugten Ausführungsform des erfindungsgemäßen Verfahrens ist vorgesehen, dass das kalzinierte Gemisch nach dem Waschen abermals kalziniert wird, vorzugsweise bei einer Temperatur von 400 °C bis 800 °C, bevorzugt bei einer Temperatur von 500 °C bis 600 °C. Der zweite Kalzinierschritt bewirkt, dass die Zr-Freisetzung des Materials weiter herabgesetzt wird.

Die vorliegende Erfindung betrifft ferner einen Katalysatorträger, erhältlich gemäß dem erfindungsgemäßen Verfahren.

Der mittels des erfindungsgemäßen Verfahrens erhältliche Katalysatorträger umfasst ein natürliches Schichtsilikat sowie $ZrO_2$ in tetragonaler Modifikation umfasst, wobei es dabei weiter bevorzugt ist, dass zumindest 50 Gew.-% des in dem Katalysatorträger enthaltenen $ZrO_2$ in tetragonaler Modifikation vorliegen, vorzugsweise 90 Gew.-% und besonders bevorzugt 95 Gew.-% bis 100 Gew.-%.

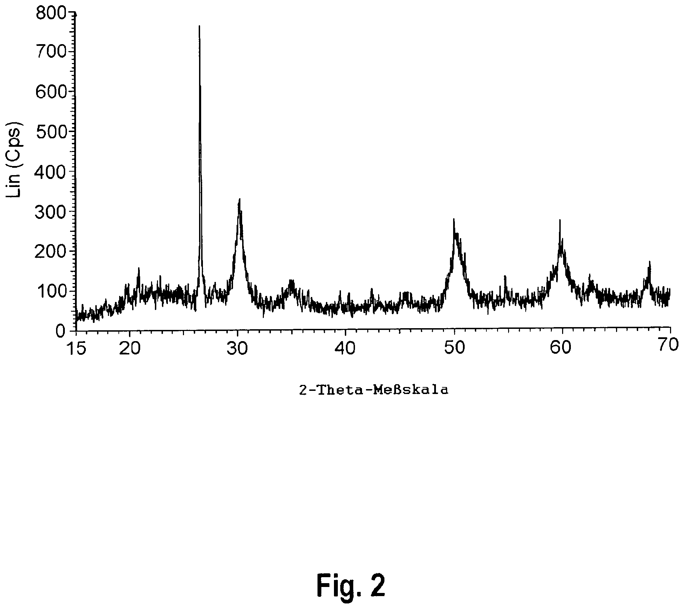

Die vorliegende Erfindung betrifft ferner einen Katalysatorträger mit einem XRD-Spektrum gemäß Figur 2. Die vorliegende Erfindung betrifft ferner die Verwendung des erfindungsgemäßen Katalysatorträgers sowie des mittels des erfindungsgemäßen Verfahrens erhältlichen Katalysatorträgers sowie des durch das XRD-Spektrum der Figur 2 gekennzeichneten erfindungsgemäßen Katalysatorträgers bei der Herstellung eines Katalysators für die Synthese von Alkenylacetaten.

Gemäß einer bevorzugten Ausführungsform der erfindungsgemäßen Verwendung ist es vorgesehen, dass der Katalysator ein Schalenkatalysator ist, in dessen Schale Pd und Au der Oxidationsstufe 0 enthalten sind.

Die nachfolgenden Beispiele dienen im Zusammenhang mit der Zeichnung der Erläuterung der Erfindung. Es zeigen:

Fig. 1: Ausschnitt aus einer EDX-Aufnahme von einem ersten erfindungsgemäßen Katalysatorträger gemäß Beispiel 1;

Fig. 2: XRD-Spektrum des ersten erfindungsgemäßen Katalysatorträgers;

Fig. 3: Ausschnitt aus einer EDX-Aufnahme von einem zweiten erfindungsgemäßen Katalysatorträger gemäß Beispiel la;

Fig. 4: XRD-Spektrum eines Katalysatorträgers des Standes der Technik gemäß Beispiel 4;

Fig. 5: Ausschnitt aus einer EDX-Aufnahme des Katalysatorträgers gemäß Beispiel 4.

Beispiel 1:

500,0 g eines säurebehandelten getrockneten pulverförmigen Bentonits (säureaktivierter Bentonit) mit dem Hauptbestandteil Montmorillonit als Schichtsilikat wurden mit einer 61,875 g $ZrO_2$ entsprechenden Menge an handelsüblichem $Zr(OH)_4$ mit einem $d_{10}$-Wert von ca. 1 $\mu m$, einem $d_{50}$-Wert von ca. 5 $\mu m$ und mit einem $d_{90}$-Wert von 7 $\mu m$ sowie mit 10 g eines üblichen organischen Binders / Porenbildners miteinander vermischt.

Das resultierende Gemisch wurde mit Wasser versetzt und mittels eines Mischers zu einem Teig verarbeitet, aus dem mittels einer Tablettenpresse unter Druck kugelförmige Formkörper (d = 5 mm) hergestellt wurden. Zur Aushärtung wurden die Kugeln getrocknet und bei einer Temperatur von 650 °C über einen Zeitraum von 5 h kalziniert. Nach dem Kalzinieren wurden die Formkörper über einen Zeitraum von 30 h mit 20 %iger Salzsäure behandelt, ausgiebig mit Wasser gewaschen und für einen Zeitraum von 5 h bei einer Temperatur von 600 °C kalziniert. Die so erhaltenen Formkörper weisen die in der Tabelle 1 aufgeführten Charakteristika auf:

Tabelle 1:

| Geometrische Form | Kugel |
|---|---|
| Durchmesser | 5 mm |
| Feuchtegehalt | 0,5 Gew.-% |
| Druckfestigkeit | 60 N |
| Schüttgewicht | 607 g/l |
| Wassersaugvermögen | 58 % |
| spezif. Oberfläche (BET) | 133 $m^2$/g |
| $SiO_2$-Gehalt | 81,6 Gew.-% |
| $ZrO_2$-Gehalt | 12,8 Gew.-% |
| $ZrO_2$-Ausbeute | 98 % |
| Anteil an tetragonalem $ZrO_2$ (gemäß XRD-Diffraktogramm bestimmt) | > 90 Gew.-% |
| $Al_2O_3$-Gehalt | 2,5 Gew.-% |
| Glühverlust 1000 °C | 1,5 Gew.-% |
| Acidität | 62 pval |
| integrales Porenvolumen | 0,377 ml/g |
| Zr-Freisetzung | 0,001 Gew.-% |
| mittlerer Porendurchmesser (nach BJH) (4V/A) | 10,5 nm |
| Anteil der Mikroporen am integralen Porenvolumen | < 1 % |
| Anteil, den die Poren mit 2,0 nm bis 6 nm Durchmesser am integralen Porenvolumen haben | 14,3 % |
| Anteil, den die Poren mit größer 6,0 nm bis 50 nm Durchmesser am integralen Porenvolumen haben | 70,2 % |
| Anteil, den die Poren mit 2,0 nm bis 50 nm Durchmesser am integralen Porenvolumen haben | 84,5 % |
| mittlere Partikelgröße $d_{50}$ des $ZrO_2$ (aus EDX-Mapping bestimmt) | 20 $\mu m$ |

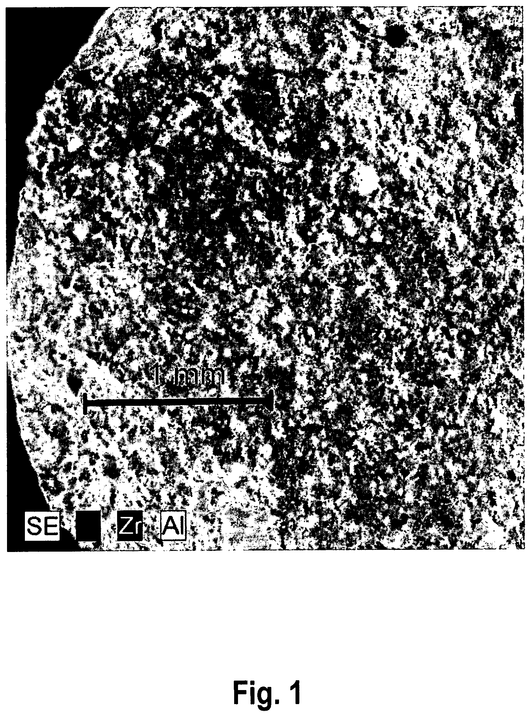

Ein Katalysatorträger gemäß Beispiel 1 wurde halbiert und die Schnittfläche einer Hälfte mittels energiedispersiver Röntgenspektroskopie (EDX) vermessen. Figur 1 zeigt einen Ausschnitt aus der EDX-Aufnahme. Die homogen statistische Verteilung der $ZrO_2$-Partikel (dunkle Flecken) in der Trägermatrix ist deutlich erkennbar.

Ein Katalysatorträger gemäß Beispiel 1 wurde zu einem Pulver vermahlen und röntgendiffraktometrisch vermessen. Das resultierende XRD-Spektrum ist in der Figur 2 gezeigt. In dem XRD-Spektrum können lediglich die Signale von tetragonalem $ZrO_2$ identifiziert werden. Monoklines oder kubisches $ZrO_2$ kann in dem Spektrum nicht identifiziert

werden.

Beispiel Ia:

Es wurden Katalysatorträger analog Beispiel 1 hergestellt mit dem einzigen Unterschied, dass eine 132 g $ZrO_2$ entsprechende Menge an handelsüblichem $Zr(OH)_4$ eingesetzt wurde. Die so erhaltenen Formkörper weisen die in Tabelle 1a aufgeführten Charakteristika auf:

Tabelle 1a:

| Geometrische Form | Kugel |
|---|---|
| Durchmesser | 5 mm |
| Feuchtegehalt | 0,4 Gew.-% |
| Druckfestigkeit | 33 N |
| Schüttgewicht | 580 g/l |
| Wassersaugvermögen | 67,1 % |
| spezif. Oberfläche (BET) | 132 $m^2$/g |
| $SiO_2$-Gehalt | 69,5 Gew.-% |
| $ZrO_2$ -Gehalt | 24,5 Gew.-% |
| $ZrO_2$-Ausbeute | 99 % |
| Anteil an tetragonalem $ZrO_2$ (gemäß XRD-Diffraktogramm bestimmt) | > 90 Gew.-% |
| $Al_2O_3$-Gehalt | 1,8 Gew.-% |
| Glühverlust 1000 °C | 1,6 Gew.-% |
| Acidität | 23 pval |
| integrales Porenvolumen | 0,4 ml/g |
| Zr-Freisetzung | 0,001 Gew.-% |
| mittlerer Porendurchmesser (nach BJH) (4V/A) | 11,0 nm |
| Anteil der Mikroporen am integralen Porenvolumen | < 1 % |
| Anteil, den die Poren mit 2,0 nm bis 6 nm Durchmesser am integralen Porenvolumen haben | 13,6 % |
| Anteil, den die Poren mit größer 6,0 nm bis 50 nm Durchmesser am integralen Porenvolumen haben | 71,7 % |
| Anteil, den die Poren mit 2,0 nm bis 50 nm Durchmesser am integralen Porenvolumen haben | 85,3 % |
| mittlere Partikelgröße $d_{50}$ des $ZrO_2$ (aus EDX-Mapping bestimmt) | 20 $\mu$m |

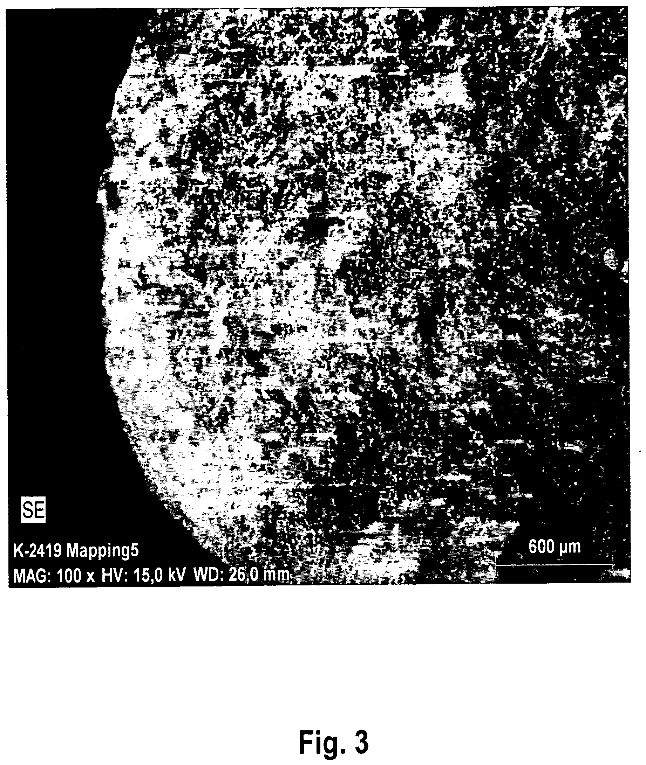

Ein Katalysatorträger gemäß Beispiel 1a wurde halbiert und die Schnittfläche einer Hälfte mittels EDX vermessen. Figur 3 zeigt einen Ausschnitt aus der EDX-Aufnahme. Die homogen statistische Verteilung der $ZrO_2$-Partikel (helle Flecken) in der Trägermatrix ist deutlich erkennbar.

Beispiel Ib:

Es wurden Katalysatorträger analog Beispiel 1 hergestellt mit dem einzigen Unterschied, dass die Katalysatorträger für einen Zeitraum von nur 8 h mit Salzsäure behandelt wurden. Die so erhaltenen Formkörper weisen die in der Tabelle 1b aufgeführten ausgewählten Charakteristika auf:

Tabelle 1b:

| $ZrO_2$-Gehalt | 12,6 Gew.-% |
|---|---|

(fortgesetzt)

| Anteil an tetragonalem $ZrO_2$ (gemäß XRD-Diffraktogramm bestimmt) | > 90 Gew.-% |
|---|---|
| Zr-Freisetzung | 0,002 Gew.-% |
| mittlerer Porendurchmesser (nach BJH) (4V/A) | 7,7 nm |
| $ZrO_2$-Ausbeute | 98,5 % |

Beispiel 2:

Es wurden Katalysatorträger analog Beispiel 1 hergestellt mit dem Unterschied, dass die erste Kalzinierung nach der Formgebung bei nur 550 °C durchgeführt wurde. Die so erhaltenen Formkörper weisen die in der Tabelle 2 aufgeführten ausgewählten Charakteristika auf:

Tabelle 2:

| $ZrO_2$-Gehalt | 9,6 Gew.-% |
|---|---|
| Zr-Freisetzung | 0,001 Gew.-% |
| mittlerer Porendurchmesser (nach BJH) (4V/A) | 11,0 nm |
| $ZrO_2$-Ausbeute | 76 % |

Der so erhaltene Träger weist eine $ZrO_2$-Ausbeute von lediglich 76 % auf und einen $ZrO_2$-Gehalt von 9,6 Gew.-%.

Beispiel 3 (Vergleichsbeispiel):

Ein kommerziell erhältlicher Katalysatorträger der Fa. Süd-Chemie AG, München, Deutschland mit der Handelsbezeichnung "KA-160" weist beispielsweise die in der Tabelle 3 angegebenen Charakteristika auf:

Tabelle 3:

| Geometrische Form | Kugel |
|---|---|
| Durchmesser | 5 mm |
| Wassersaugvermögen | 66,4 % |
| spezif. Oberfläche (BET) | 161 m$^2$/g |
| $SiO_2$-Gehalt | 91,8 Gew.-% |
| $Al_2O_2$-Gehalt | 3,6 Gew.-% |
| mittlerer Porendurchmesser (nach BJH) (4V/A) | 10,3 nm |
| integrales Porenvolumen | 0,436 ml/g |
| Anteil, den die Poren mit 2,0 nm bis 6 nm Durchmesser am integralen Porenvolumen haben | 11,0 % |
| Anteil, den die Poren mit größer 6,0 nm bis 50 nm Durchmesser am integralen Porenvolumen haben | 71,6 % |
| Anteil, den die der Poren mit 2,0 nm bis 50 nm Durchmesser am integralen Porenvolumen haben | 82,7 % |

Beispiel 4 (Vergleichsbeispiel):

(vgl. US 5,808,136) 74,6 g einer wässrigen Lösung von Zirkonylacetat ($ZrO(OAc)_2$), die einen Zr-Gehalt von 15,5 Gew.-% aufwies, wurde mit ca. 8,5 ml Wasser verdünnt. 100 g des Katalysatorträgers KA-160 der Fa. Süd-Chemie AG gemäß Beispiel 3 wurden mit der vorstehenden Lösung imprägniert. Der imprägnierte Träger wurde getrocknet und bei 500 °C kalziniert. Der resultierende Katalysatorträger wies einen Zirkongehalt von ca. 10 Gew.-% auf (kalkulatorisch entsprechend 13,53 Gew.-% $ZrO_2$). In der Tabelle 4 sind weitere Charakteristika des Trägers aufgeführt:

Tabelle 4:

| Geometrische Form | Kugel |
|---|---|
| Durchmesser | 5 mm |
| Wassersaugvermögen | 49,1 % |
| spezif. Oberfläche (BET) | 134 $m^2$/g |
| Zr-Gehalt* | 10,0 Gew.-% |
| $SiO_2$-Gehalt | 80,9 Gew.-% |
| Zr-Freisetzung* | 0,129 Gew.-% |
| $Al_2O_3$-Gehalt | 3,0 Gew.-% |
| mittlerer Porendurchmesser (nach BJH) (4V/A) | 9,1 nm |
| integrales Porenvolumen | 0,332 ml/g |
| Anteil, den die Poren mit 2,0 nm bis 6 nm Durchmesser am integralen Porenvolumen haben | 20,0 % |
| Anteil, den die Poren mit größer 6,0 nm bis 50 nm Durchmesser am integralen Porenvolumen haben | 65,1 % |
| Anteil, den die Poren mit 2,0 nm bis 50 nm Durchmesser am integralen Porenvolumen haben | 85,2 % |
| *Zur Berechnung wird der kalkulatorisch aus dem Zr-Gehalt ermittelte $ZrO_2$-Gehalt von 13,53 Gew.-% herangezogen | |

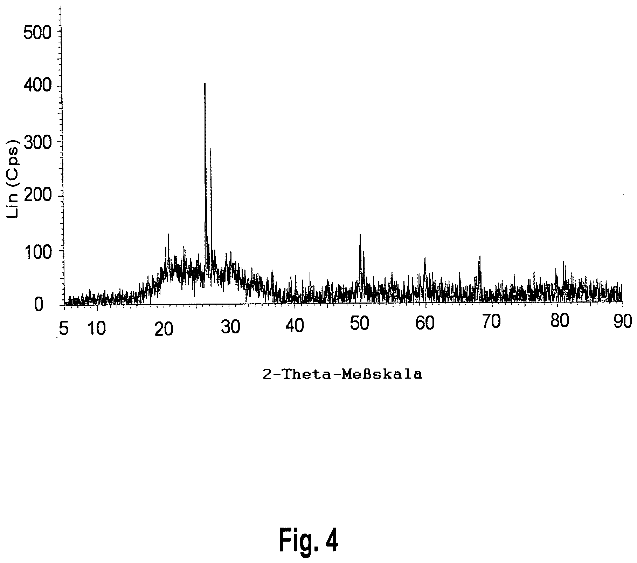

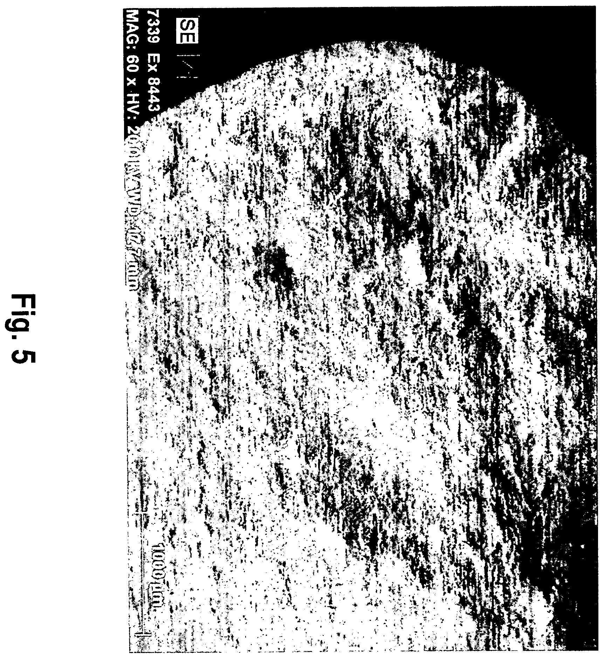

In Figur 4 ist das XRD-Spektrum eines gemäß Beispiel 4 hergestellten Katalysatorträgers gezeigt. Aus dem Spektrum ist ersichtlich, dass das Zr in dem Träger nicht in einer röntgenbeugungsaktiven oxidischen Form vorliegt.
Ein Katalysatorträger gemäß Beispiel 4 wurde halbiert und die Schnittfläche einer Hälfte mittels EDX vermessen. Figur 5 zeigt einen Ausschnitt aus der EDX-Aufnahme. Es sind keine diskreten zirkonhaltigen Partikel erkennbar.

Beispiel 5 (Vergleichsbeispiel):

Es wurden Katalysatorträger analog Beispiel 1 hergestellt mit dem einzigen Unterschied, dass 57,8 g einer 20 %igen Zirkonylnitrat-Lösung verdünnt mit 19,7 ml Wasser eingesetzt wurden. In der Tabelle 5 sind Charakteristika des so erhaltenen Trägers aufgeführt:

Tabelle 5:

| Zr-Gehalt* | 2,6 Gew.-% |
|---|---|
| Zr-Freisetzung* | 0,06 Gew.-% |
| *Zur Berechnung wird der kalkulatorisch aus dem Zr-Gehalt ermittelte $ZrO_2$-Gehalt von 3,51 Gew.-% herangezogen. | |

Beobachtung: Beim Trocknen löst sich an der Oberfläche angereichertes Zirkonylnitrat ab, wodurch ein hoher Zirkonverlust eintritt.

Vergleichender Überblick:

In der Tabelle 6 sind der mittlere Porendurchmesser, das integrale Porenvolumen sowie Anteile bestimmter Porengrößen am integralen Porenvolumen der Beispiele 3, 4, 1 und 1a gegenübergestellt.

Tabelle 6:

| Beispiel | 3 | 4 | 1 | 1a |
|---|---|---|---|---|
| mittlerer Porendurchmesser (nach BJH) (4V/A) | 10,3 nm | 9,1 nm | 10,5 nm | 11,0 nm |
| integrales Porenvolumen | 0,436 ml/g | 0,332 ml/g | 0,377 ml/g | 0,40 ml/g |

(fortgesetzt)

| Beispiel | 3 | 4 | 1 | 1a |
|---|---|---|---|---|
| Anteil, den die Poren mit 2,0 nm bis 6 nm Durchmesser am integralen Porenvolumen haben | 11,0 % | 20,0 % | 14,3 % | 13,6 % |
| Anteil, den die Poren mit größer 6,0 nm bis 50 nm Durchmesser am integralen Porenvolumen haben | 71,6 % | 65,1 % | 70,2 % | 71,7 % |
| Anteil, den die Poren mit 2,0 nm bis 50 nm Durchmesser am integralen Porenvolumen haben | 82,7 % | 85,2 % | 84,5 % | 85,3 % |

Die nachträgliche Imprägnierung des kommerziellen KA-160-Trägers aus Beispiel 3 mit Zr gemäß Beispiel 4 führt zu einem signifikanten Rückgang des integralen Porenvolumens und zu einer Verengung von Poren. Der Anteil an Poren von 2 nm bis 6 nm nimmt signifikant auf Kosten der Mesoporen über 6 nm zu. Der erfindungsgemäße und nach dem erfindungsgemäßen Verfahren hergestellte Katalysatorträger gemäß der Beispiele 1 und 1a weist gegenüber dem Katalysatorträger aus Beispiel 3 hingegen trotz der Dotierung mit 12,8 Gew.-% bzw. 24,5 Gew.-% $ZrO_2$ einen insgesamt höheren oder zumindest vergleichbaren Meso-Porenanteil auf bei erhöhtem mittleren Porendurchmesser.

In der Tabelle 7 sind die Zr-Freisetzungen der Beispiele 1, 1a, 1b, 2, 4 und 5 gegenübergestellt.

Tabelle 7:

| Beispiel | 1 | 1a | 1b | 2 | 4 | 5 |
|---|---|---|---|---|---|---|
| Zr-Freisetzung [Gew.-%] | 0,001 | 0,001 | 0,002 | 0,001 | 0,129 | 0,060 |

Die Katalysatorträger der Beispiele 1, 1a und 1b sowie 2 weisen im Vergleich zu den Beispielen 4 und 5 eine deutlich verminderte Zr-Freisetzung auf.

**Patentansprüche**

1. Offenporiger Katalysatorträger, bestehend aus einem Material, welches ein natürliches Schichtsilikat sowie $ZrO_2$ in tetragonaler Modifikation umfasst, **dadurch gekennzeichnet, dass** der Katalysatorträger als Formkörper ausgebildet ist, in siedender Essigsäure weniger als 0,06 Gew.-% Zr berechnet als $ZrO_2$ freisetzt, bezogen auf das Gewicht des in dem Katalysatorträger enthaltenen $ZrO_2$, das $ZrO_2$ in partikulärer Form vorliegt und statistisch gleichmäßig im Träger verteilt ist.

2. Katalysatorträger nach Anspruch 1, **dadurch gekennzeichnet, dass** die $ZrO_2$-Partikel gleichmäßig über den Querschnitt des Trägers verteilt sind und dass der Träger im Wesentlichen frei von einem Perkolationsnetzwerk, bestimmt mittels EDX-Messung, von $ZrO_2$-Partikeln ist.

3. Katalysatorträger nach einem der Ansprüche 1 oder 2, **dadurch gekennzeichnet, dass** das natürliche Schichtsilikat ein säureaktiviertes Schichtsilikat ist.

4. Katalysatorträger nach einem der Ansprüche 1 bis 3, **dadurch gekennzeichnet, dass** zumindest 80 % des integralen Porenvolumens, bestimmt gemäß DIN 66134, des Katalysatorträgers von Mesoporen und Makroporen gebildet sind.

5. Katalysatorträger nach einem der Ansprüche 1 bis 4, **dadurch gekennzeichnet, dass** der Katalysatorträger mit zumindest einem Oxid eines Metalls ausgewählt aus der Gruppe bestehend aus Hf, Ti, Nb, Ta, W, Mg, Re, Y und Fe dotiert ist.

6. Katalysatorträger nach Anspruch 5, **dadurch gekennzeichnet, dass** der Anteil des Katalysatorträgers an Dotierungsoxid 1 Gew.-% bis 20 Gew.-% beträgt.

7. Verfahren zur Herstellung eines Katalysatorträgers nach Anspruch 1, umfassend

- Herstellen eines Gemisches, umfassend ein pulverförmiges natürliches Schichtsilikat und pulverförmiges Zirkoniumhydroxid;

- Kalzinieren des Gemisches bei einer Temperatur oberhalb von 620 °C;

wobei das Gemisch vor dem Kalzinieren zu einem Formkörper geformt wird.

**8.** Verfahren nach Anspruch 7, **dadurch gekennzeichnet, dass** das natürliche Schichtsilikat ein säureaktiviertes natürliches Schichtsilikat ist.

**9.** Verfahren nach Anspruch 7 oder 8, **dadurch gekennzeichnet, dass** das pulverförmige Zirkoniumhydroxid einen $d_{10}$-Wert zwischen 0,1 $\mu$m und 3,0 $\mu$m, einen $d_{50}$-Wert zwischen 0,5 $\mu$m und 10 $\mu$m und einen $d_{90}$-Wert zwischen 1,0 $\mu$m und 20 $\mu$m aufweist, jeweils bestimmt mittels Laserbeugung.

**10.** Verfahren nach einem der Ansprüche 7 bis 9, **dadurch gekennzeichnet, dass** das Gemisch nach dem Kalzinieren mit einer Mineralsäure behandelt wird.

**11.** Verwendung eines Katalysatorträgers nach einem der Ansprüche 1 bis 6 bei der Herstellung eines Katalysators für die Synthese von Alkenylacetaten.

**12.** Verwendung nach Anspruch 11, **dadurch gekennzeichnet, dass** der Katalysator ein Schalenkatalysator ist, in dessen Schale Pd und Au der Oxidationsstufe 0 enthalten sind.

**Claims**

1. Open-pored catalyst support consisting of a material which comprises a natural sheet silicate and also $ZrO_2$ in the tetragonal modification, **characterized in that** the catalyst support is in the form of a shaped body, liberates less than 0.06% by weight of Zr, calculated as $ZrO_2$ and based on the weight of the $ZrO_2$ present in the catalyst support, in boiling acetic acid, the $ZrO_2$ is present in particulate form and is statistically distributed uniformly in the support.

2. Catalyst support according to Claim 1, **characterized in that** the $ZrO_2$ particles are distributed uniformly over the cross section of the support and **in that** the support is essentially free of a percolation network, determined by means of a EDX measurement, of $ZrO_2$ particles.

3. Catalyst support according to either Claim 1 or 2, **characterized in that** the natural sheet silicate is an acid-activated sheet silicate.

4. Catalyst support according to any of Claims 1 to 3, **characterized in that** at least 80% of the integrated pore volume, determined in accordance with DIN 66134, of the catalyst support is formed by meso-pores and macropores.

5. Catalyst support according to any of Claims 1 to 4, **characterized in that** the catalyst support is doped with at least one oxide of a metal selected from the group consisting of Hf, Ti, Nb, Ta, W, Mg, Re, Y and Fe.

6. Catalyst support according to Claim 5, **characterized in that** the proportion of doping oxide in the catalyst support is from 1% by weight to 20% by weight.

7. Process for producing a catalyst support according to Claim 1, comprising

   - production of a mixture comprising a pulverulent natural sheet silicate and pulverulent zirconium hydroxide;
   - calcination of the mixture at a temperature above 620°C;

   wherein the mixture is shaped to give a shaped body before calcination.

8. Process according to Claim 7, **characterized in that** the natural sheet silicate is an acid-activated natural sheet silicate.

9. Process according to Claim 7 or 8, **characterized in that** the pulverulent zirconium hydroxide has a $d_{10}$ value between 0.1 $\mu$m and 3.0 $\mu$m, a dso value between 0.5 $\mu$m and 10 $\mu$m and a $d_{90}$ value between 1.0 $\mu$m and 20 $\mu$m, in each case determined by means of laser light scattering.

**10.** Process according to any of Claims 7 to 9, **characterized in that** the mixture is treated with a mineral acid after calcination.

**11.** Use of a catalyst support according to any of Claims 1 to 6 in the production of a catalyst for the synthesis of alkenyl acetates.

**12.** Use according to Claim 11, **characterized in that** the catalyst is a shell catalyst in the outer layer of which Pd and Au in the oxidation state 0 are present.

**Revendications**

**1.** Support de catalyseur à pores ouverts, consistant en un matériau qui comprend un phyllosilicate naturel, ainsi que du $ZrO_2$ sous forme tétragonale, **caractérisé en ce que** le support de catalyseur est réalisé sous forme d'un objet moulé, libère dans l'acide acétique bouillant moins de 0,06 % en poids de Zr, calculé en $ZrO_2$, par rapport au poids du $ZrO_2$ contenu dans le support de catalyseur, le $ZrO_2$ est présent sous forme particulaire et est réparti d'une manière statistiquement uniforme dans le support.

**2.** Support de catalyseur selon la revendication 1, **caractérisé en ce que** les particules de $ZrO_2$ sont réparties uniformément sur la section transversale du support, et **en ce que** le support est pour l'essentiel exempt de réseau de percolation, la détermination se faisant par une mesure EDX, de particules de $ZrO_2$.

**3.** Support de catalyseur selon l'une des revendications 1 ou 2, **caractérisé en ce que** le phyllosilicate naturel est un phyllosilicate activé par un acide.

**4.** Support de catalyseur selon l'une des revendications 1 à 3, **caractérisé en ce qu'**au moins 80 % du volume intégral des pores, déterminé selon DIN 66134, du support de catalyseur sont formés de mésopores et de macropores.

**5.** Support de catalyseur selon l'une des revendications 1 à 4, **caractérisé en ce que** le support de catalyseur est dopé par au moins un oxyde d'un métal choisi dans le groupe consistant en Hf, Ti, Nb, Ta, W, Mg, Re, Y et Fe.

**6.** Support de catalyseur selon la revendication 5, **caractérisé en ce que** la teneur du support de catalyseur en l'oxyde dopant est de 1 % en poids à 20 % en poids.

**7.** Procédé de fabrication d'un support de catalyseur selon la revendication 1, comprenant

- la fabrication d'un mélange comprenant un phyllosilicate naturel pulvérulent et de l'hydroxyde de zirconium pulvérulent ;
- la calcination du mélange à une température supérieure à 620 °C ;

le mélange étant moulé avant la calcination pour donner un objet moulé.

**8.** Procédé selon la revendication 7, **caractérisé en ce que** le phyllosilicate naturel est un phyllosilicate naturel activé par un acide.

**9.** Procédé selon la revendication 7 ou 8, **caractérisé en ce que** l'hydroxyde de zirconium pulvérulent présente un $d_{10}$ entre 0,1 $\mu$m et 3,0 $\mu$m, un $d_{50}$ entre 0,5 $\mu$m et 10 $\mu$m et un $d_{90}$ entre 1,0 $\mu$m et 20 $\mu$m, chacun étant déterminé par diffraction laser.

**10.** Procédé selon l'une des revendications 7 à 9, **caractérisé en ce que** le mélange est traité par un acide minéral après la calcination.

**11.** Utilisation d'un support de catalyseur selon l'une des revendications 1 à 6 lors de la fabrication d'un catalyseur pour la synthèse d'acétates d'alcényle.

**12.** Utilisation selon la revendication 11, **caractérisé en ce que** le catalyseur est un catalyseur à enveloppe, dans l'enveloppe duquel Pd et Au sont présents au degré d'oxydation 0.

**Fig. 1**

**Fig. 2**

SE

K-2419 Mapping5

MAG: 100 x HV: 15,0 kV WD: 26,0 mm

600 µm

**Fig. 3**

Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 565952 A1
- EP 634214 A1
- EP 634209 A1
- EP 634208 A1
- EP 839793 A1
- WO 1998018553 A1
- WO 2000058008 A1
- WO 2005061107 A1
- US 5808136 A

**In der Beschreibung aufgeführte Nicht-Patentliteratur**

- **STAUFFER D. ; AHARONY A.** Introduction to Percolation Theory. Taylor and Fransis, 1994
- **HOLLEMANN WIBERG.** Lehrbuch der anorganischen Chemie. de Gruyter, 2007
- Phyllosilikat. Römpp Lexikon Chemie. Georg Thieme Verlag
- Bentonite. Römpp Lexikon Chemie. Georg Thieme Verlag